# EUROPEAN PATENT APPLICATION

(11) **EP 2 889 740 A1**
(43) Date of publication of application: **01.07.2015**
(21) Application number: 14186760.6
(22) Date of filing: 29.09.2014
(51) Int. Cl.: G06F 3/0481, G06F 3/0488

(54) **METHOD, APPARATUS AND COMPUTER PROGRAM PRODUCT FOR ZOOMING AND OPERATING SCREEN FRAME**

(30) Priority: 27.12.2013 TW 102148820
(71) Applicant: Acer Incorporated, New Taipei City 221 (TW)
(72) Inventor: Tsai, Hsiao-Lan, 221 New Tapei City (TW); Ho, Zheng-Ru, 221 New Tapei City (TW); Chen, Wen-Kang, 221 New Tapei City (TW)
(74) Representative: 2K Patentanwälte Blasberg Kewitz & Reichel

(57) **Abstract**

A method, an apparatus and a computer program product for zooming and operating screen frame are provided. In the method, a first touch operation that slides from a first edge region of a full screen frame displayed by a touch screen into the touch screen is received, so as to execute a first function on an electronic apparatus, and a second touch operation that slides from a second edge region of a zoomed frame displayed by the touch screen into the zoomed frame, so as to execute a second function on the zoomed frame. Therein, a size of the zoomed frame is smaller than a size of the full screen frame.

## Description

### BACKGROUND OF THE INVENTION

### Field of the Invention

The invention relates to a method, an apparatus and a computer program product for operating a user interface, and more particularly, relates to a method, an apparatus and a computer program product for zooming and operating a screen frame.

### Description of Related Art

With improvement in technology, electronic apparatuses such as smart phones and tablet computers are popularized each day with touch technology that provides diverse and user-friendly human-to-machine interaction.

Currently, for an electronic apparatuses using a touch screen as an operation tool, as in response to the demands for users in writing documents, transceiving e-mail, browsing Internet, viewing multimedia or using instant messaging software, the electronic apparatuses are gradually developed to be disposed with a larger touch screen (touch displays) to facilitate the user in operation.

However, the larger touch screen cannot be easily held by a user with one hand. The user often needs to use both hands in order operate the touch screen, resulting in difficulties and inconvenience for the user in operating the electronic apparatus.

### SUMMARY OF THE INVENTION

Accordingly, the invention provides a method, an apparatus and a computer program product for zooming and operating a screen frame, capable of correspondingly executing different functions according to touch operations of the user for edge regions of a zoomed frame or edge regions of a touch screen, so as to improve convenience for the user in operating the electronic apparatus.

The method for zooming and operating a screen frame is adapted for an electronic apparatus having a touch screen (touch display). In the method, a first touch operation that slides from a first edge region of a full screen frame displayed by a touch screen into the touch screen is received, so as to execute a first function on the electronic apparatus. Thereafter, a second touch operation that slides from a second edge region of a zoomed frame displayed by the touch screen into the zoomed frame is received, so as to execute a second function on the zoomed frame. Therein, a size of the zoomed frame is smaller than a size of the full screen frame.

In an embodiment of the invention, the step of receiving the first touch operation that slides from the first edge region of the full screen frame displayed by the touch screen into the touch screen, so as to execute the first function on the electronic apparatus includes: when the first touch operation starts at the first edge region, displaying a first menu for zooming the frame; when the first touch operation slides from the first edge region into the first menu and ends at the first menu, entering a frame zooming mode to display a page operation frame on the touch screen; and scaling down the full screen frame into the zoomed frame, and displaying the zoomed frame on a first region in the page operation frame.

In an embodiment of the invention, the step of entering the frame zooming mode to display the page operation frame on the touch screen further includes: displaying a plurality of page preview frames corresponding to a plurality of pages of the electronic apparatus on other regions except the first region in the page operation frame.

In an embodiment of the invention, after the step of displaying the page preview frames corresponding to the pages of the electronic apparatus on the other regions except the first region in the page operation frame, the method further includes: receiving a third touch operation that slides from a third edge region of the zoomed frame into the zoomed frame, so as to switch to display a page frame of a neighboring page of the zoomed frame on the first region.

In an embodiment of the invention, the step of receiving the third touch operation that slides from the third edge region of the zoomed frame into the zoomed frame, so as to switch to display the page frame of the neighboring page of the zoomed frame on the first region includes: moving the page preview frame of the neighboring page according to a moving distance of the third touch operation on a moving direction, so as to move the page preview frame from the third edge region into the zoomed frame; and when the third touch operation ends at the zoomed frame and the moving distance exceeds a preset distance, switching to display the page frame of the neighboring page of the zoomed frame on the first region.

In an embodiment of the invention, after the step of entering the frame zooming mode to display the page operation frame on the touch screen, the method further includes displaying an operation icon on other regions except the first region in the page operation frame, and receiving a fourth touch operation for the operation icon, so as to correspondingly move the zoomed frame according to the fourth touch operation.

In an embodiment of the invention, after the step of displaying the operation icon on the other regions except the first region in the page operation frame, the method further includes receiving a fifth touch operation that moves from the second edge region of the zoomed frame to the operation icon; and when the fifth touch operation ends at the operation icon, exiting the frame zooming mode and restoring the zoom screen back to the full screen frame.

In an embodiment of the invention, the step of receiving the second touch operation that slides from the second edge region of the zoomed frame displayed by the touch screen into the zoomed frame, so as to execute the second function on the zoomed frame includes displaying a second menu for restoring frame when the second touch operation starts at the second edge region, and exiting the frame zooming mode and restoring the zoomed frame back to the full screen frame when the second touch operation slides from the second edge region into the second menu and ends at the second menu.

In an embodiment of the invention, after the step of entering the frame zooming mode to display the page operation frame on the touch screen, the method further includes receiving a sixth touch operation that slides from a fourth edge region of the page operation frame into the page operation frame, so as to execute a third function on the electronic apparatus.

The apparatus for zooming and operating screen frame of the invention includes a touch screen, a storage unit and one or more processing units. Therein, the touch screen is configured to detect a touch operation. The storage unit is configured to store a plurality of modules. The processing unit is coupled to the touch screen and the storage unit, and configured to access and execute the modules recorded in the storage unit. The modules include a device function module and a frame function module. Therein, the device function module is configured to receive from the touch screen a first touch operation that slides from a first edge region of a full screen frame displayed by the touch screen into the touch screen, so as to execute a first function on the electronic apparatus. The frame function module is configured to receive a second touch operation that slides from a second edge region of a zoomed frame displayed by the touch screen into the zoomed frame, so as to execute a second function on the zoomed frame, wherein a size of the zoomed frame is smaller than a size of the full screen frame.

In an embodiment of the invention, when the first touch operation starts at the first edge region, the device function module displays a first menu for zooming frame; and when the first touch operation slides from the first edge region into the first menu and ends at the first menu, the electronic apparatus enters a frame zooming mode, and the frame function module displays a page operation frame on the touch screen, scales down the full screen frame into the zoomed frame, and displays the zoomed frame on a first region in the page operation frame.

In an embodiment of the invention, the electronic apparatus further includes a page preview module. The page preview module displays a plurality of page preview frames corresponding to a plurality of pages of the electronic apparatus on other regions except the first region in the page operation frame.

In an embodiment of the invention, the frame function module further receives a third touch operation that slides from a third edge region of the zoomed frame into the zoomed frame, so as to switch to display a page frame of a neighboring page of the zoomed frame on the first region

In an embodiment of the invention, the frame function module moves the page preview frame of the neighboring page according to a moving distance of the third touch operation on a moving direction so as to move the page preview frame from the third edge region into the zoomed frame, and switches to display the page frame of the neighboring page of the zoomed frame on the first region when the third touch operation ends at the zoomed frame and the moving distance exceeds a preset distance.

In an embodiment of the invention, the electronic apparatus further includes a frame operation module. The frame operation module displays an operation icon on other regions except the first region in the page operation frame, and receives a fourth touch operation for the operation icon, so as to correspondingly move the zoomed frame according to the fourth touch operation.

In an embodiment of the invention, the frame function module further receives a fifth touch operation that moves from the second edge region of the zoomed frame to the operation icon, and when the fifth touch operation ends at the operation icon, the electronic apparatus exits the frame zooming mode, and the frame function module restores the zoom screen back to the full screen frame.

In an embodiment of the invention, when the second touch operation starts at the second edge region, the frame function module displays a second menu for restoring frame, and when the second touch operation slides from the second edge region into the second menu and ends at the second menu, the electronic apparatus exits the frame zooming mode, and the frame function module restores the zoomed frame back to the full screen frame.

In an embodiment of the invention, the device function module further receives a sixth touch operation that slides from a fourth edge region of the page operation frame into the page operation frame, so as to execute a third function on the electronic apparatus.

The invention also provides a computer program product which includes programs to be loaded into an electronic apparatus to perform steps of: receiving a first touch operation that slides from a first edge region of a full screen frame displayed by a touch screen into the touch screen, so as to execute a first function on the electronic apparatus; and receiving a second touch operation that slides from a second edge region of a zoomed frame displayed by the touch screen into the zoomed frame, so as to execute a second function on the zoomed frame. Therein, a size of the zoomed frame is smaller than a size of the full screen frame.

Based on above, the method, the apparatus and the computer program product for zooming and operating screen frame according to the embodiments of the invention are capable of entering the frame zooming mode by utilizing the touch operation for the edge region of the touch screen, so as to scale down the full screen framed into the zoomed frame. Thereafter, when the user operates on the edge region of the touch screen, the corresponding function may be executed on the electronic apparatus as a whole, and when the user operates on the edge region of the zoomed frame, the corresponding function may only be executed on the zoomed frame. As a result, besides that the user is able to operate with one hand through the zoomed frame, the embodiments of the invention may further improve diversity in operations of the electronic apparatus by dividing regions for the touch operations at different edges into regions respectively having different functions.

To make the above features and advantages of the disclosure more comprehensible, several embodiments accompanied with drawings are described in detail as follows.

### BRIEF DESCRIPTION OF THE DRAWINGS

FIG. 1 is a block diagram illustrating an electronic apparatus for zooming and operating screen frame according to an embodiment of the invention.
FIG. 2 is a flowchart illustrating a method for zooming and operating screen frame according to an embodiment of the invention.
FIG. 3 is a flowchart illustrating a method for zooming and operating screen frame according to an embodiment of the invention.
FIG. 4 is an example illustrating the method for zooming and operating screen frame according to an embodiment of the invention.
FIG. 5 is an example illustrating the method for zooming and operating screen frame according to an embodiment of the invention.
FIG. 6A is an example illustrating the method for zooming and operating screen frame according to an embodiment of the invention.
FIG. 6B is an example illustrating the method for zooming and operating screen frame according to an embodiment of the invention.
FIG. 6C is an example illustrating the method for zooming and operating screen frame according to an embodiment of the invention.
FIG. 7 is a flowchart illustrating a method for zooming and operating screen frame according to an embodiment of the invention.
FIG. 8 is a flowchart illustrating a method for zooming and operating screen frame according to an embodiment of the invention.
FIG. 9A is an example illustrating the method for zooming and operating screen frame according to an embodiment of the invention.
FIG. 9B is an example illustrating the method for zooming and operating screen frame according to an embodiment of the invention.
FIG. 10 is a flowchart illustrating a method for zooming and operating screen frame according to an embodiment of the invention.
FIG. 11 is an example illustrating the method for zooming and operating screen frame according to an embodiment of the invention.

### DESCRIPTION OF THE EMBODIMENTS

For the electronic apparatuses using the touch screen as an operation tool, the larger touch screen has gradually became a development trend nowadays, but results in that the user may only operate a display frame of the touch screen by using both hands. In order to allow the user to operate with one hand, a design of a frame zooming mode (ZoomFit) is provided in a user interface according to embodiments of the invention, and capable of scaling down a full screen frame into a zoomed frame. A corresponding function may be executed on the electronic apparatus when the user operates on an edge region of the touch screen, whereas a corresponding function may be executed on the zoomed frame when the user operates on an edge region of the zoomed frame. In the frame zooming mode, the user may switch the page frame displayed in the zoomed frame, or correspondingly move the zoomed frame by utilizing an operation icon, and may exit the frame zooming mode by a touch operation for the edge region of the zoomed frame or for the operation icon. Accordingly, the embodiments of the invention are capable of executing the corresponding functions on the zoomed frame and the electronic apparatus respectively according the touch operations on the edge regions of the zoomed frame or the edge regions of the touch screen, so as to improve convenience for the user in operating the electronic apparatus. Also, by scaling down the full screen frame into the zoomed frame, despites the larger touch screen being used, the user may still operate the zoomed frame with one hand, such that the problem in which the larger touch screen cannot be easily operated by using one hand may then be effectively solved.

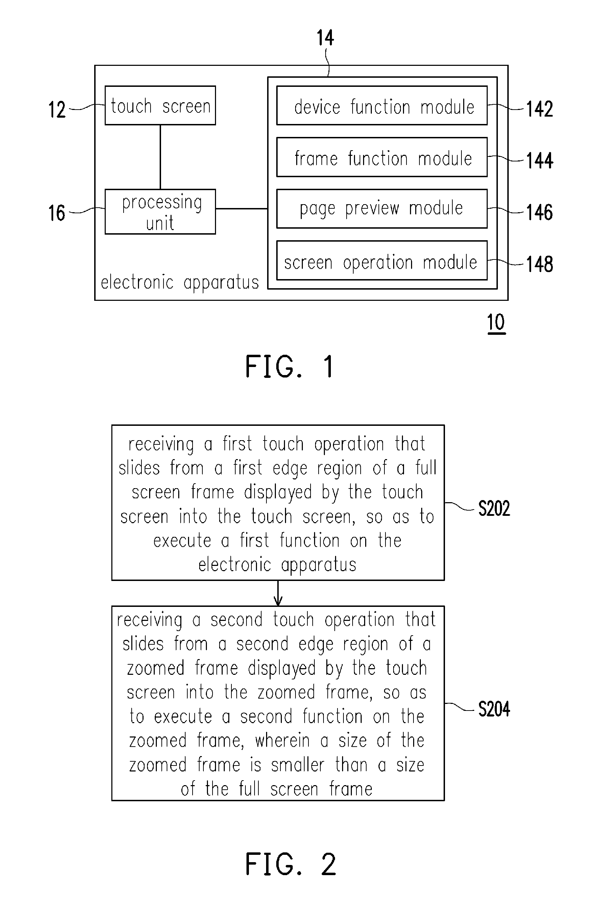

FIG. 1 is a block diagram illustrating an electronic apparatus for zooming and operating screen frame according to an embodiment of the invention. Referring to FIG. 1, an electronic apparatus 10 may be various electronic apparatuses with touch and display capabilities, such as a smart phone, a personal digital assistant (PDA) or a tablet computer (hereinafter, the embodiments are generally described by using the electronic apparatus 10), but types of the electronic apparatus are not particularly limited by the invention.

The electronic apparatus 10 includes a touch screen 12, a storage unit 14 and one or more processing units 16. The touch screen 12 is an input and output interface of the electronic apparatus 10, and is configured to display various screen frames of the electronic apparatus 10 and detect the touch operations of the user for screen frame. The touch screen 12 is composed of, for example, a display (including liquid crystal display (LCD), a light-emitting diode (LED) display, a field emission display (FED) or other displays) together with a touch panel of resistive type or capacitive type, and capable of providing display and operation functionalities.

The storage unit 14 may be a fixed or a movable device in any possible forms including a random access memory (RAM), a read-only memory (ROM), a flash memory or other similar devices, or a combination of the above-mentioned devices. In the present embodiment, the storage unit 14 is configured to record software programs including a device function module 142, a frame function module 144, a page preview module 146, and a screen operation module 148. In the present embodiment, the storage unit 14 is not limited to be one single memory device. Said modules in software manner may also be stored separately in different two or more of the same or different memory devices.

The processing unit 16 is coupled to the touch screen 12 and the storage unit 14. The processing unit 16 may be a central processing unit (CPU) of single-core or multi-core or other programmable devices for general purpose or special purpose such as a microprocessor and a digital signal processor (DSP), a programmable controller, an application specific integrated circuit (ASIC) or other similar elements or a combination of above-mentioned elements. In the present embodiment, the processing unit 16 is configured to access and execute the modules recorded in the storage unit 14, so as realize a method for zooming and operating screen frame according to the embodiments of the invention. In the present embodiment, the processing unit 16 is not limited to be only one single processing device, and two or more processing devices may also be used for execution together.

FIG. 2 is a flowchart illustrating a method for zooming and operating screen frame according to an embodiment of the invention. Referring to FIG. 1 and FIG. 2 together, a method of the present embodiment is adapted for the electronic apparatus 10. Detailed steps in the method of the present embodiment are described as below, with reference to each element of the electronic apparatus 10 depicted in FIG. 1.

First, the device function module 142 receives from the touch screen 12 a first touch operation that slides from a first edge region of a full screen frame displayed by the touch screen 12 into the touch screen, so as to execute a first function on the electronic apparatus 10 (step S202). More specifically, the first edge region may include edges of the touch screen 12 and/or neighboring positions thereof. In some embodiments, in addition to the edges of the touch screen 12, the first edge region may also include a virtual button near the edges of the touch screen 12, such as a button for returning back to a home frame of the electronic apparatus 10 (e.g., a home button) or other buttons.

In an embodiment, the first function may be a command executed corresponding to the electronic apparatus 10. For example, in Android system, when the user executes a touch operation that slides down from an upper edge of the touch screen 12, the device function module 142 may display a drop-down menu on a frame in response to such operation, which is provided for the user to operate functions of the electronic apparatus 10 such as volume control, wireless network connection (e.g., bluetooth or Wireless Fidelity (WiFi)) or other functions.

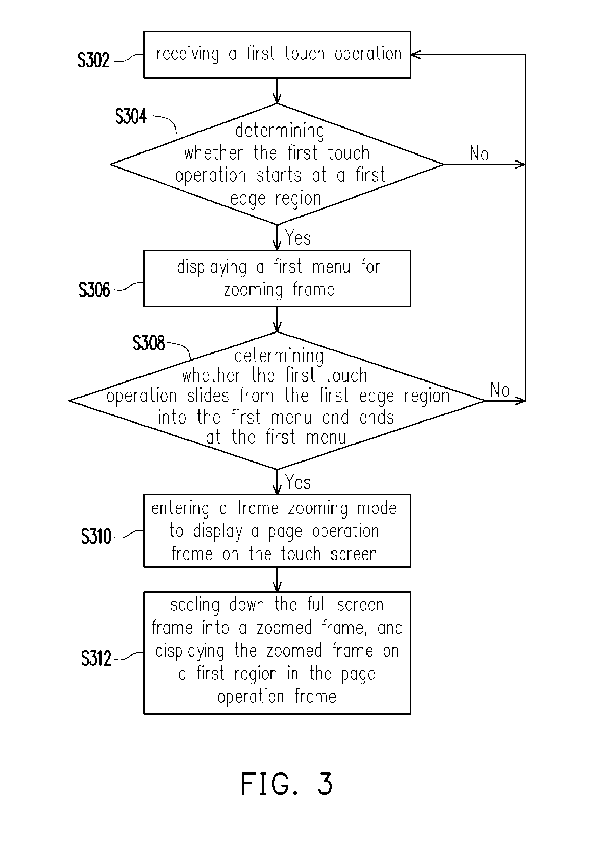

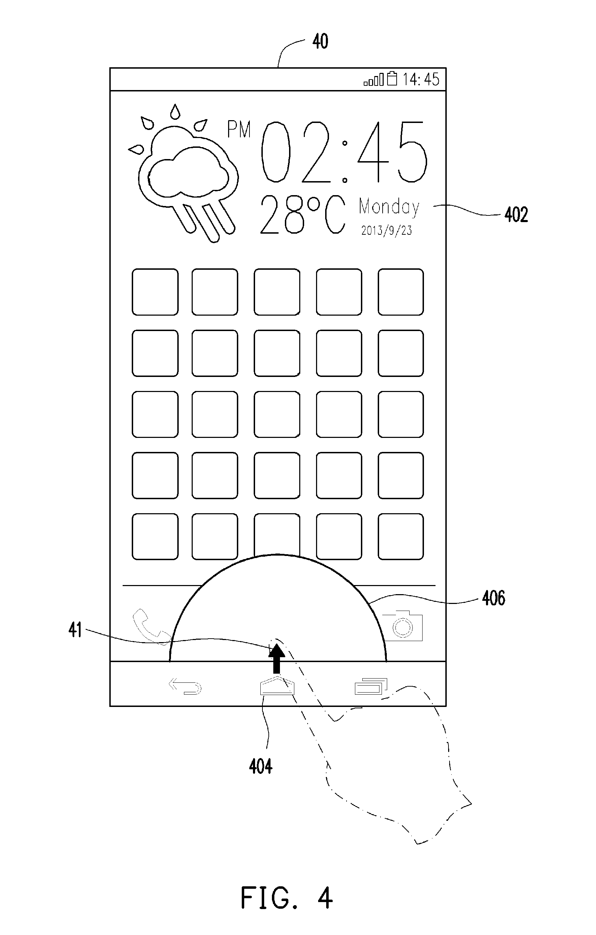

In another embodiment, the first function may also be a command for entering a frame zooming mode executed corresponding to the electronic apparatus 10. More details are provided below by using a flowchart of FIG. 3 together with a schematic diagram of FIG. 4.

Referring to FIG. 3, FIG. 3 is a flowchart illustrating a method for zooming and operating screen frame according to an embodiment of the invention. First, the device function module 142 receives a first touch operation (step S302), and determines whether the first touch operation starts at a first edge region (step S304). Said first edge region is, for example, regions adjacent to upper, lower, left or right edges of a touch screen 40, or buttons or icons within said regions. When the first touch operation starts at the first edge region, the device function module 142 displays a first menu for zooming frame (step S306). In the present embodiment, the first touch operation may be a drag operation, and the first menu may be displayed at a place near the first edge region which allows the first touch operation to enter the first menu and stop therein after sliding for a specific distance. Accordingly, the device function module 142 may detect and determine whether the first touch operation is the corresponding touch operation executed for entering the frame zooming mode.

For instance, referring to an example of FIG. 4. In the present embodiment, the first edge region is a button 404 located near a lower edge of a full screen frame 402 displayed by the touch screen 40. When the user executes the touch operation that slides from the button 404 into the touch screen 40 and the device function module 142 determines that the first touch operation starts at the button 404, the device function module 142 may display a first menu 406 on a side near the button 404 on the touch screen 40. In other embodiments, the device function module 142 may also display the first menu 406 on other positions of the touch screen 40. In the first menu 406, a prompting text related to entering of the frame zooming mode may also be displayed for the user to read. Further, in other embodiments, the device function module 142 may also display other objects in other manners, such as other icons or other buttons. In said first menu 406, the other objects such as icons or buttons may be used to determine an end position of the first touch operation.

It should be noted that, actions of the device function module 142 for displaying the first menu 406 according to the first touch operation are not related to a display frame on the touch screen. That is, regardless of what frame is the touch screen 40 displaying, when the device function module 142 detects that the first touch operation starts at the button 404 and corresponds to entering of the frame zooming mode, the device function module 142 may then display the first menu 406 on the touch screen 40.

Referring back the flowchart of the FIG. 3, next, the device function module 142 determines whether the first touch operation slides from the first edge region into the first menu and ends at the first menu (step S308). When it is determined that the first touch operation slides from the first edge region into the first menu and ends at the first menu, the electronic apparatus 10 enters the frame zooming mode, so as to display a page operation frame on the touch screen 12 through the frame function module 144 (step S310), scale down the full screen frame into the zoomed frame, and display the zoomed frame on a first region in the page operation frame (step S312).

For instance, referring to an example of FIG. 4 again. After the device function module 142 detects that the first touch operation starts at the button 404 below the touch screen 40, the device function module 142 also determines whether the first touch operation slides into the first menu 406 and ends at the first menu 406. In the present embodiment, the first touch operation slides into the first menu 406 along an arrow 41, and ends at the first menu 406. Accordingly, the device function module 142 determines that the first touch operation slides into and ends at the first menu 406, so that the electronic apparatus 10 may enter the frame zooming mode according to the first touch operation.

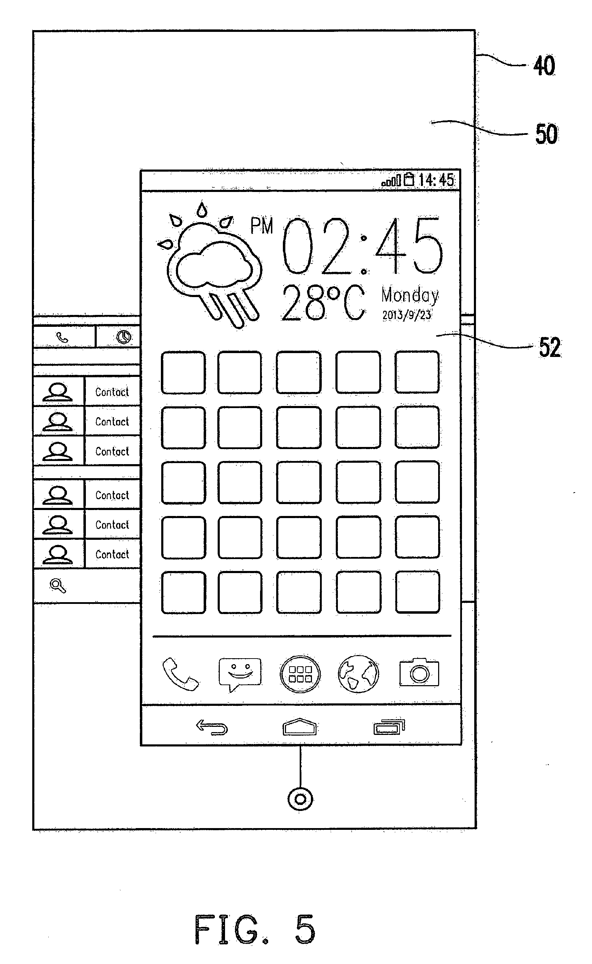

Referring to FIG. 4 and FIG. 5. FIG. 4 illustrates a frame displayed on the touch screen 40 before the electronic apparatus 10 enters the frame zooming mode, and FIG. 5 illustrates a frame displayed by the touch screen 40 after the electronic apparatus 10 enters the frame zooming mode. Therein, when the electronic apparatus 10 enters the frame zooming mode, the frame function module 144 may then display a page operation frame 50 on the touch screen 40, and scale down the full screen frame (as shown in FIG. 4, which is displayed before entering the frame zooming mode) into zoomed frame 52. The zoomed frame 52 may be preset to be displayed on a right side of the touch screen 40 to correspond to the first region. The zoomed frame 52 may be located within a range reachable for the user by one hand. Accordingly, the user is able operate the zoomed frame 52 with one hand. And, even if the touch screen 40 is a larger touch screen, the user may still operate the zoomed frame with one hand, such that the problem in which the larger touch screen 40 cannot be easily operated by one hand may then be solved.

It should be noted, in some embodiments, the user may also enter the frame zooming mode by clicking on the buttons, the icons or other menus on the touch screen 40. In other words, manners for making the electronic apparatus 10 to enter the frame zooming mode and manners of the first touch operation are not particularly limited in the embodiments of the invention. Further, in some embodiments, the zoomed frame 52 may also be displayed on other positions of a touch screen 50 depending on different demands, which is not particularly limited in the embodiments of the invention.

Referring back to the flowchart of FIG. 2, the frame function module 144 receives a second touch operation that slides from a second edge region of a zoomed frame displayed by the touch screen 12 into the zoomed frame, so as to execute a second function on the zoomed frame, wherein a size of the zoomed frame is smaller than a size of the full screen frame (step S204). Therein, the second edge region may be each edge of the zoom screen and neighboring regions thereof, and a touch operation executed on the second edge region may trigger a function executed corresponding to the zoomed frame. In other words, after the electronic apparatus 10 enters the frame zooming mode, the user may execute the corresponding operation on the zoomed frame through the second touch operation. Therein, the second touch operation may correspond to multiple functions of the zoomed frame such as switching the page, moving the page, or exiting the frame zooming mode. Details are provided below reference to the embodiments

First, a method of switching to display the page of the zoomed frame is described. In an embodiment, in addition to said page corresponding to the zoomed frame, the touch screen 12 may further display preview frames of other pages in front or at back of said page for the user to switch to a desired page. In other words, the electronic apparatus 10 may also include the page preview module 146. After the electronic apparatus 10 enters the frame zooming mode, besides the frame function module 144 that displays the page operation on the touch screen 12, the page preview module 146 may also display a plurality of page preview frames corresponding to a plurality of pages of the electronic apparatus 10 on other regions except the first region in the page operation frame. Therein, when a third touch operation that slides from a third edge region of the zoomed frame into the zoomed frame is received, the frame function module 144 switches to display a page frame of a neighboring page of the zoomed frame on the first region.

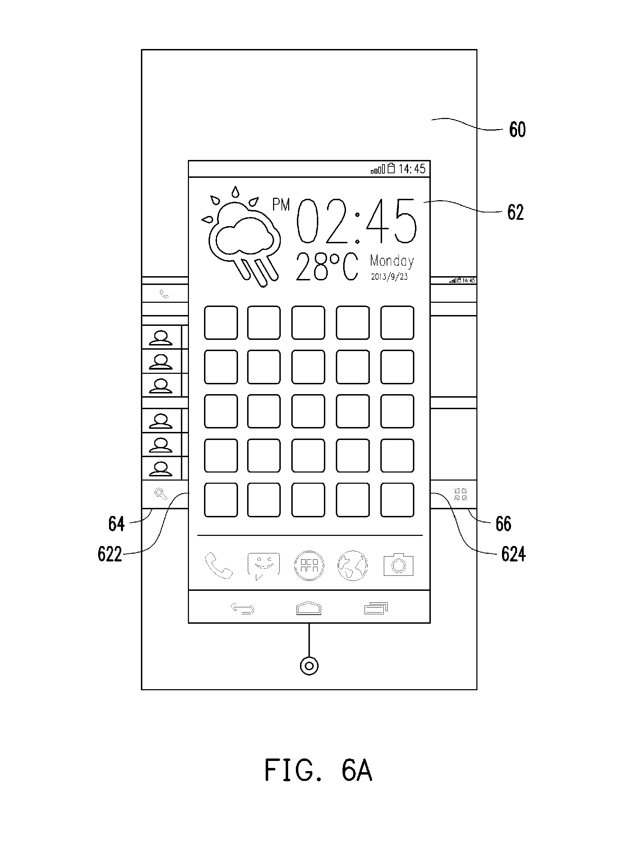

Therein, aforesaid pages may include a home page, a tool bar page, a system setting page of the electronic apparatus 10 or pages of applications already executed on the electronic apparatus 10. These pages may include a specific sequence based on conditions such as system settings or timings when being activated by the user, and may be displayed as smaller preview frames in the page operation frame, so as to provide contents of the preview pages for the user. As shown in an example of FIG. 6A, in a page operation frame 60 displayed by the touch screen, the page preview module 146 displays page preview frames 64 and 66 respectively at left and right sides of a zoomed frame 62. Therein, displayed contents of the page preview frame 64, the zoomed frame 62 and the page preview frame 66 are three neighboring pages arranged in said specific sequence. Edge regions 622 and 624 of the zoomed frame 62 are respectively located at the left and right sides of the zoomed frame 62 with respect to the page preview frames 64 and 66, so as to receive an operation of the user for sliding into the zoomed frame 62 thereby switching the page displayed in the zoom page 62. It should be noted that, the page preview frames 64 and 66 may also be displayed at upper and lower sides of the zoom page 62 or other regions in the page operation frame 60, and positions of the edge regions 622 and 624 of the zoom page 62 are then decided accordingly. Those skilled in the art may adjust positions, sizes and displaying amounts of the page preview frames in the page operation frame 60 based on design requirements, which are not particularly limited by the invention.

On the other hand, aforesaid touch operation may correspond to the touch operation that slides from the edge region of the zoomed frame into the zoomed frame. In the resent embodiments, the frame function module 144 is used to determine an end position and a moving distance of the touch operation, so as to decide whether to switch to display the page frame in the page preview frame on the zoomed frame.

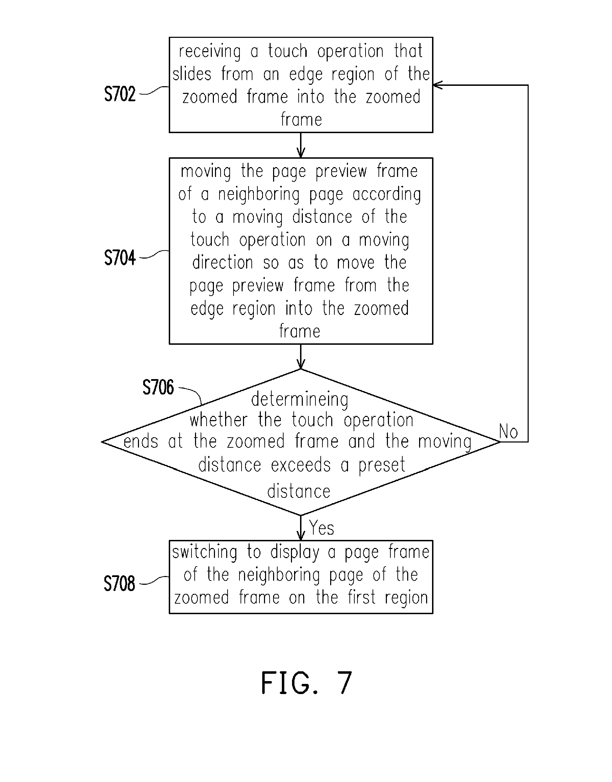

Herein, FIG. 7 is provided below for illustrating how the frame function module 144 switches the display pages in the zoomed frame. FIG. 7 is a flowchart illustrating a method for zooming and operating screen frame according to an embodiment of the invention. In the present embodiment, the frame function module 144 receives a touch operation that slides from an edge region of the zoomed frame into the zoomed frame (step S702), and moves the page preview frame of the neighboring page according to a moving distance of the touch operation on a moving direction (e.g., a horizontal direction), so as to move the page preview frame from the third edge region into the zoomed frame (step S704). Thereafter, the frame function module 144 determines whether the touch operation ends at the zoomed frame and a moving distance exceeds a preset distance (step S706), and when the touch operation ends at the zoomed frame and the moving distance exceeds the preset distance, the frame function module 144 switches to display the page frame of the neighboring page of the zoomed frame on the first region (step S708).

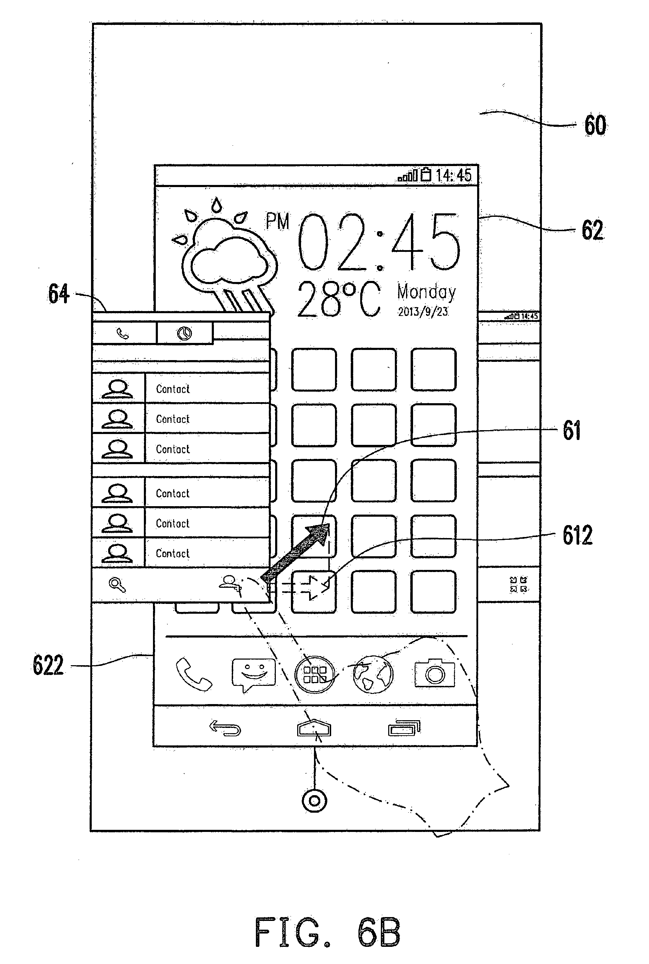

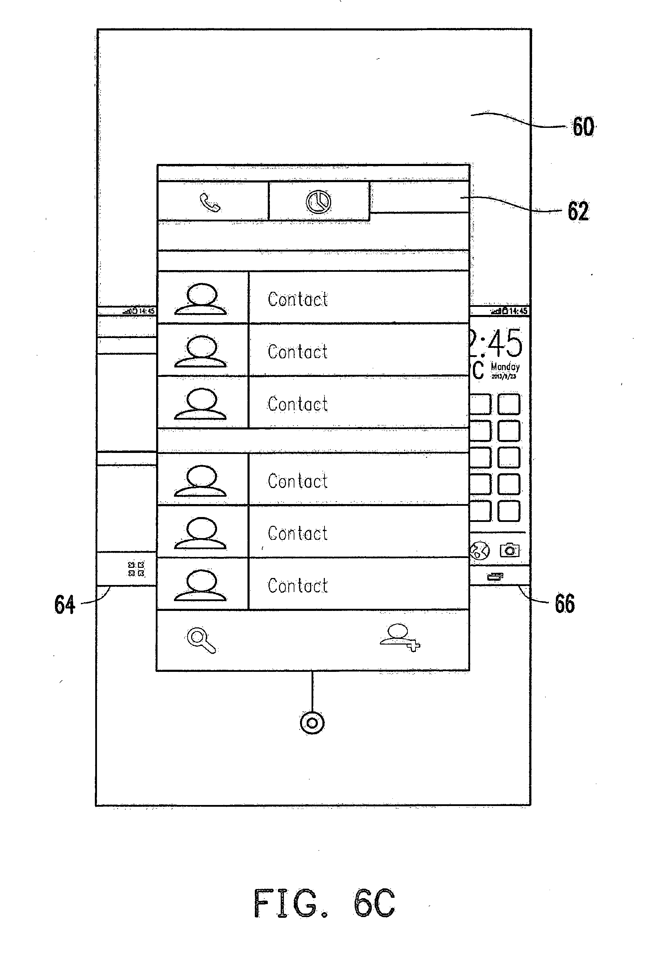

For instance, referring to an example of FIG. 6B, when the frame function module 144 receives a touch operation that slides from the edge region 622 into the zoomed frame 62 along an arrow 61, the frame function module 144 may correspondingly move the page preview frame 64 along a moving distance (i.e., the moving distance along the arrow 61) of the touch operation on the horizontal direction, and the page preview frame 64 may then enter the zoomed frame 62 accordingly (as shown in FIG. 6B). In the present embodiment, the preset distance may be set to a half width of the zoomed frame 62. Therefore, when the frame function module 144 determines that the touch operation ends at the zoomed frame 62 and the moving distance exceeds the preset distance, the frame function module 144 may determine that the user intends to switch the display frame in the zoomed frame 62, thereby switching to display the page frame corresponding to the page preview frame 64 on the zoomed frame 62 (as shown in FIG. 6C).

It should be noted that, in response to the switch and display operation for the zoomed frame 62, the page preview module 146 may also correspondingly adjust the display frames in the page preview frames 64 and 66 according to said sequence for all the pages. For example, after switching to display the page frame in the zoomed frame, the frame in the zoomed frame 62 of FIG. 6B is also correspondingly adjusted to be displayed in the page preview frame 66. Accordingly, in the present embodiment, the page preview module 146 displays the preview frames corresponding to the pages in the specific sequence, and sequentially switches to display the page frames in the zoomed frame 62 by utilizing the touch operation for the edge regions 622 and 624 of the zoomed frame 62.

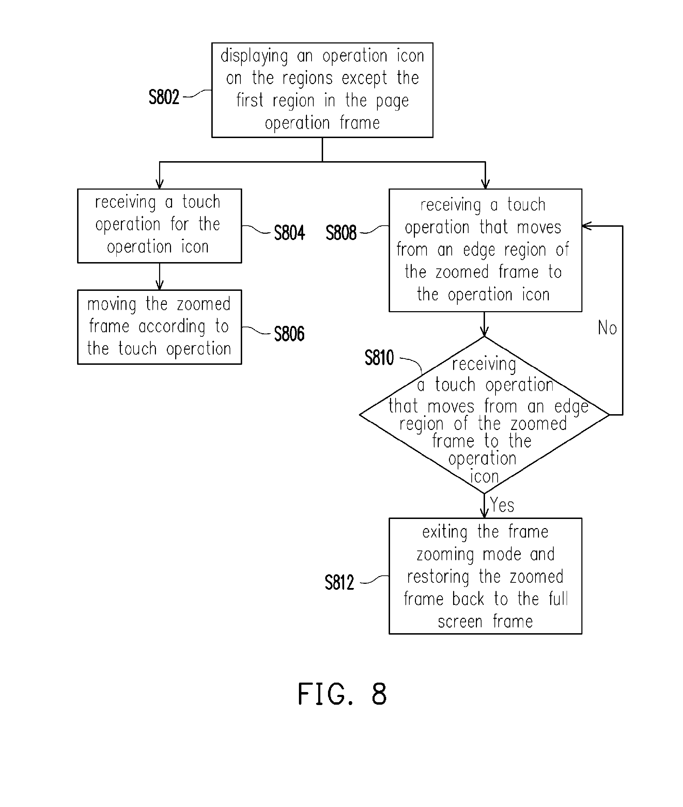

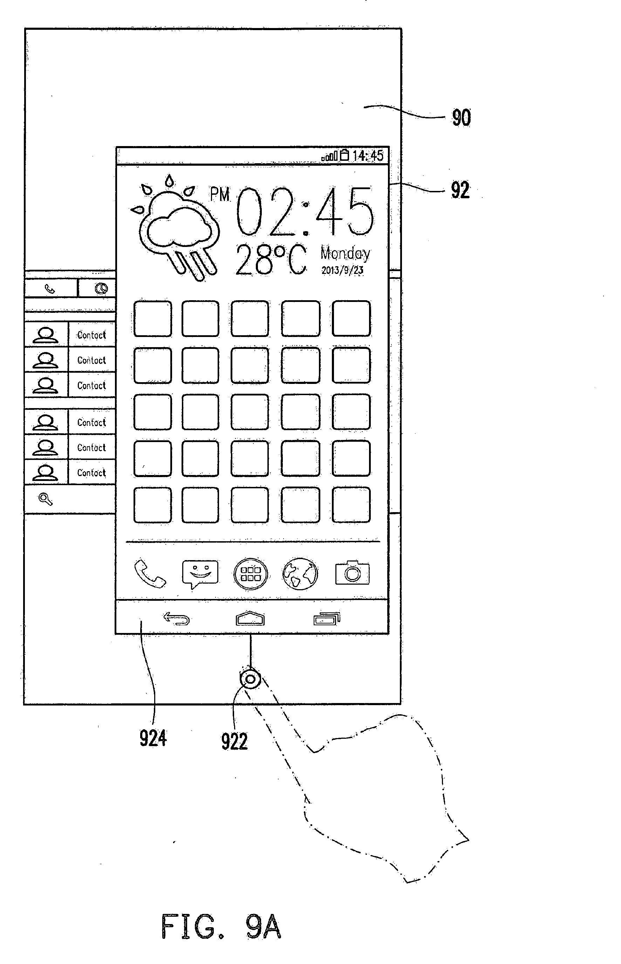

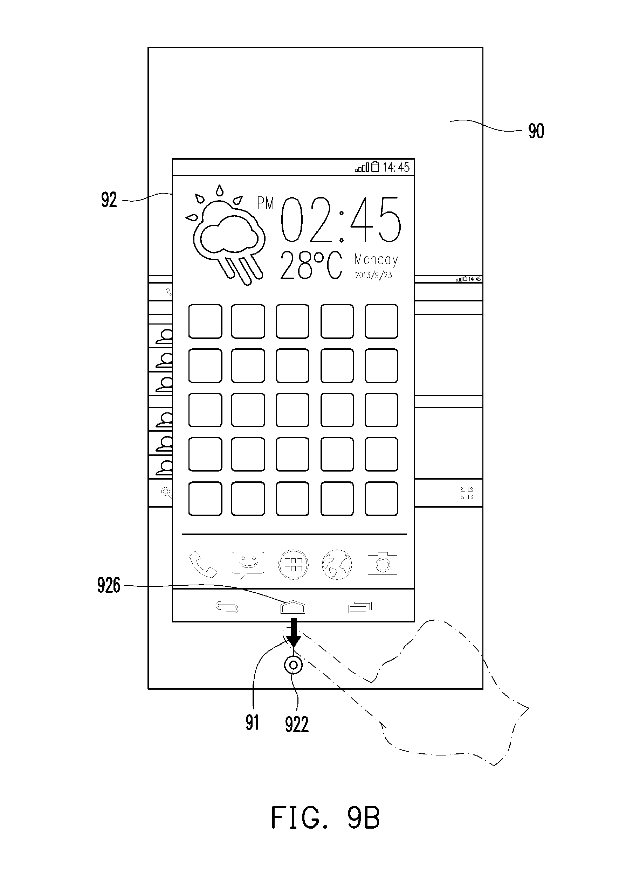

On the other hand, in the frame zooming mode, the invention further provides an operation icon for the user to control the zoomed frame by utilizing the operation icon. More specifically, in an embodiment, the electronic apparatus 10 may further include the frame operation module 148, which is configured to move a position of the zoomed frame on the touch screen 12 or decide whether to exit the frame zooming mode. More details are provided below by using a flowchart of FIG. 8 together with an example of FIG. 9.

FIG. 8 is a flowchart illustrating a method for zooming and operating screen frame according to an embodiment of the invention. First, the frame operation module 148 displays an operation icon on other regions except the first region in the page operation frame (step S802). For example, in an example of FIG. 9A, an operation icon 922 is displayed at a place near and below a lower edge region 924 of a zoomed frame 92 in a page operation frame 90 displayed by the touch screen. Next, when the frame operation module 148 receives the touch operation for the operation icon (step S804), the frame operation module 148 may correspondingly move the zoomed frame according to the touch operation (step S806). Therein, the touch operation may correspond to a drag action of the user for the operation icon 922 in the example of FIG. 9, thus the zoomed frame 92 may be correspondingly moved according to a motion trajectory of the drag action.

When the frame operation module 148 receives a touch operation that moves from the edge region of the zoomed frame to the operation icon (step S808), the frame operation module 148 may determine whether the touch operation ends at the operation icon (step S810). For instance, referring back to the example of FIG. 9B. In this example, the edge region is a button 926 near a lower edge of the zoomed frame 92 in the page operation frame 90 displayed by the touch screen. The touch operation is a drag operation of the user that drags from the button 926 onto the operation icons 922 along the direction of an arrow 91. Therefore, when the frame operation module 148 determines that the touch operation ends at the operation icon 922, the electronic apparatus 10 may exit the frame zooming mode, and the frame function module 144 may restore the zoomed frame 92 back to the full screen frame (step S812).

Accordingly, in the present embodiment, the operation icon displayed on the touch screen 12 is utilized to provide a more diversified operation method for the user to operate the zoomed frame.

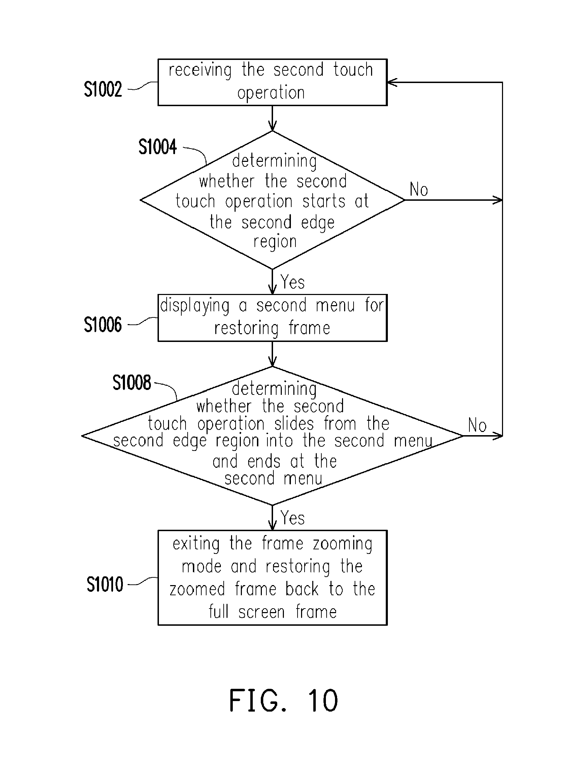

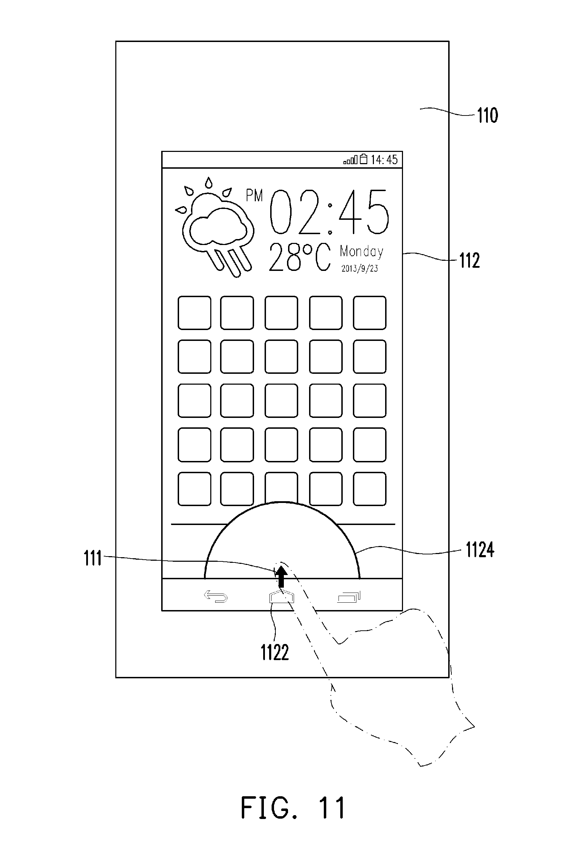

It should be noted that, in addition to existing of the frame zooming mode through the operation icon, the frame function module 144 may also receive the operation of the user for the edge region of the zoomed frame to exit the frame zooming mode. More details are provided below by using a flowchart of FIG. 10 together with an example of FIG. 11.

FIG. 10 is a flowchart illustrating a method for zooming and operating screen frame according to an embodiment of the invention, and steps in the flowchart of FIG. 10 may be executed successively after step S310 of FIG. 3. First, the frame function module 144 receives the second touch operation (step S1002). Next, the frame function module 144 determines whether the second touch operation starts at the second edge region (step S1004), and when the second touch operation starts at the second edge region, the frame function module 144 displays a second menu for restoring frame (step S1006). For examples, in an example of FIG. 11, the second edge region is a button 1122 near a lower edge of the zoomed frame 112 in the page operation frame 110 displayed by the touch screen. The second touch operation is a drag operation of the user operated on the button 1122. Accordingly, the frame function module 14 may determine that the second touch operation starts at the button 1122, and correspondingly display a second menu 1124 for restoring frame at a place near a lower edge of the zoomed frame 112. Similarly, the second menu 1124 of the present embodiment may also include a prompting text (e.g., a prompting text that says "Exit ZoomFit") related to exiting of the frame zooming mode displayed for the user to read, but the invention is not limited thereto. In addition, as similar to the first menu for entering the frame zooming mode in the foregoing embodiment, positions and sizes of the second menu 1124 are not particularly limited in the present embodiment.

Returning back to the flowchart of FIG. 10, thereafter, the frame function module 144 determines whether the second touch operation slides from the second edge region into the second menu and ends at the second menu (step S1008), and when the frame function module 144 determines that the second touch operation slides from the second edge region into the second menu and ends at the second menu (step S1010), the electronic apparatus 10 exits the frame zooming mode, and the frame function module 144 restores the zoomed frame back to the full screen frame (step S1012). Referring to the example of FIG. 11 again, in the present embodiment, the second touch operation of the user slides from the button 1122 below the zoomed frame 112 into the second menu 1124 along a direction of an arrow 111 and ends therein, thus the frame function module 144 may determine that said touch operation matches a condition for exiting the frame zooming mode, such that the electronic apparatus 10 may exit the frame zooming mode, and the frame function module 144 may restore the zoomed frame 112 back to the full screen frame 402 as displayed on the touch screen 40 in the example of FIG. 4.

Accordingly, the user may make the electronic apparatus 10 to enter the frame zooming mode through the touch operation for the edge region of the touch screen 12, and scale down the full screen frame to be displayed in the zoomed frame. As a result, it facilitates the user in operating the zoomed frame with one hand. On the other hand, the user may also exit the frame zooming mode by utilizing the touch operation for the edge region of the zoomed frame, so that the page displayed in the zoomed frame may be restored back to the full screen frame.

It should be noted that, when the electronic apparatus 10 enters the frame zooming mode and the frame function module 144 displays the page operation page on the touch screen 12, the edge region of the touch screen 12 may receive other touch operations while still executing the corresponding function on the electronic apparatus 10. More specifically, in an embodiment, the device function module 142 further receives a touch operation that slide from an edge region of the page operation frame into the page operation frame, so as to execute a specific function on the electronic apparatus. Therein, the edge region may correspond to each edge of the touch screen 12 and the neighboring regions thereof, and the touch operation may correspond to touch operations such as clicking, dragging or sliding.

For example, in an embodiment, the edge region is corresponding to an upper edge region of the touch screen 12. In case the electronic apparatus 10 is not yet entering the frame zooming mode, the user may execute a sliding operation that slides from the upper region of the touch screen 12 down into the touch screen 12, so as to corresponding activate a drop-down menu regarding the system settings. The drop-down menu may include function settings for a network connection or a volume control, so as to provide the system settings of the electronic apparatus for the user to set the network connection or the volume. After the electronic apparatus 10 enters the frame zooming mode, the electronic apparatus 10 may still retained with the function of activating the drop-down menu corresponding to the upper edge region of the touch screen 12. Accordingly, even after the electronic apparatus 10 enters the frame zooming mode, the user may still utilize the edge region of the touch screen 12 to set the states of the network connection or the volume for the electronic apparatus 10. In other words, in addition to the zoomed frame provided to facilitate the user in operations, the frame zooming mode according to the embodiments of the invention is also highly compatible with functions for the electronic apparatus 10.

The invention further provides a computer program product which includes programs to be loaded into an electronic apparatus to execute each step in the method for zooming and operating screen frame. The programs are composed of a plurality of program sections (i.e. building an organization diagram program section, approving a list program section, setting a program section, and deploying a program section). Moreover, after the programs are loaded into the electronic apparatus and executed, the steps in the method for zooming and operating screen frame may be completed.

In summary, the method, the apparatus and the computer program product for zooming and operating screen frame according to the embodiments of the invention are capable of utilizing the touch operation for the edge region of the touch screen to enter the frame zooming mode, so as to scale down the full screen framed into the zoomed frame. Thereafter, the corresponding function may be executed on the electronic apparatus as a whole when the user operates on the edge region of the touch screen, whereas the corresponding function may only be executed on the zoomed frame when the user operates on the edge region of the zoomed frame. In the frame zooming mode, the user may switch the page frame displayed in the zoomed frame, or correspondingly move the zoomed frame by utilizing an operation icon, and exit the frame zooming mode by a touch operation for the edge region of the zoomed frame or for the operation icon. Accordingly, the embodiments of the invention are capable of executing the corresponding functions on the zoomed frame and the electronic apparatus respectively according the touch operations on the edge region of the zoomed frame or the edge region of the touch screen, so as to improve convenience for the user in operating the electronic apparatus. Furthermore, by scaling down the full screen frame into the zoomed frame, despites the larger touch screen being used, the user may still operate the zoomed frame with one hand, such that the problem in which the larger touch screen cannot be easily operated by one hand may then be effectively solved.

## Claims

1. A method for zooming and operating a screen frame, adapted for an electronic apparatus (10) having a touch screen (12), comprising:
receiving (S202) a first touch operation that slides from a first edge region of a full screen frame displayed by the touch screen (12) into the touch screen (12), so as to execute a first function on the electronic apparatus (10); and
receiving (S204) a second touch operation that slides from a second edge region of a zoomed frame displayed by the touch screen (12) into the zoomed frame, so as to execute a second function on the zoomed frame, wherein a size of the zoomed frame is smaller than a size of the full screen frame.

2. The method for zooming and operating a screen frame of claim 1, wherein the step of receiving the first touch operation that slides from the first edge region of the full screen frame displayed by the touch screen (12) into the touch screen (12), so as to execute the first function on the electronic apparatus (10) comprises:
when the first touch operation starts at the first edge region (S304), displaying (S306) a first menu for zooming the frame;
when the first touch operation slides from the first edge region into the first menu and ends at the first menu, entering (S310) a frame zooming mode to display a page operation frame on the touch screen (12); and
scaling (S312) down the full screen frame into the zoomed frame, and displaying the zoomed frame on a first region in the page operation frame.

3. The method for zooming and operating a screen frame of claim 2, wherein the step of entering the frame zooming mode to display the page operation frame on the touch screen (12) further comprises:
displaying a plurality of page preview frames corresponding to a plurality of pages of the electronic apparatus (10) on other regions except the first region in the page operation frame.

4. The method for zooming and operating a screen frame of claim 3, wherein after the step of displaying the page preview frames corresponding to the pages of the electronic apparatus (10) on the other regions except the first region in the page operation frame, the method further comprises:
receiving (S702) a third touch operation that slides from a third edge region of the zoomed frame into the zoomed frame, so as to switch (S708) to display a page frame of a neighboring page of the zoomed frame on the first region.

5. The method for zooming and operating a screen frame of claim 4, wherein the step of receiving (S702) the third touch operation that slides from the third edge region of the zoomed frame into the zoomed frame, so as to switch (S708) to display the page frame of the neighboring page of the zoomed frame on the first region comprises:
moving (S704) the page preview frame of the neighboring page according to a moving distance of the third touch operation on a moving direction, so as to move the page preview frame from the third edge region into the zoomed frame; and
switching (S708) to display the page frame of the neighboring page of the zoomed frame on the first region when the third touch operation ends at the zoomed frame and a moving distance exceeds a preset distance (S706).

6. The method for zooming and operating a screen frame of any of claims 2 to 5, wherein after the step of entering the frame zooming mode to display the page operation frame on the touch screen (12), the method further comprises:
displaying (S802) an operation icon on other regions except the first region in the page operation frame; and
receiving (S804) a fourth touch operation for the operation icon, so as to correspondingly move (S806) the zoomed frame according to the fourth touch operation.

7. The method for zooming and operating a screen frame of claim 6, wherein after the step of displaying the operation icon on the other regions except the first region in the page operation frame, the method further comprises:
receiving (S808) a fifth touch operation that moves from the second edge region of the zoomed frame to the operation icon; and
exiting (S812) the frame zooming mode and restoring the zoom screen back to the full screen frame when the fifth touch operation ends at the operation icon (S810).

8. The method for zooming and operating a screen frame of any of claims 2 to 7, wherein the step of receiving the second touch operation that slides from the second edge region of the zoomed frame displayed by the touch screen (12) into the zoomed frame, so as to execute the second function on the zoomed frame, comprises:
displaying (S1006) a second menu for restoring frame when the second touch operation starts at the second edge region (S1004); and
exiting (S1010) the frame zooming mode and restoring the zoomed frame back to the full screen frame when the second touch operation slides from the second edge region into the second menu and ends at the second menu (S1008).

9. The method for zooming and operating a screen frame of any of claims 2 to 8, wherein after the step of entering the frame zooming mode to display the page operation frame on the touch screen (12), the method further comprises:
receiving a sixth touch operation that slides from a fourth edge region of the page operation frame into the page operation frame, so as to execute a third function on the electronic apparatus (10).

10. An electronic apparatus (10) for zooming and operating a screen frame, comprising:
a touch screen (12), configured to detect a touch operation;
a storage unit (14), configured to record a plurality of modules; and
one or more processing units (16), coupled to the touch screen (12) and the storage unit (14) and configured to access and execute the modules recorded in the storage unit (14), and the modules comprising:
a device function module (142), configured for receiving from the touch screen (12) a first touch operation that slides from a first edge region of a full screen frame displayed by the touch screen (12) into the touch screen (12), so as to execute a first function on the electronic apparatus (10); and
a frame function module (144), configured for receiving from the touch screen (12) a second touch operation that slides from a second edge region of a zoomed frame displayed by the touch screen (12) into the zoomed frame, so as to execute a second function on the zoomed frame, wherein a size of the zoomed frame is smaller than a size of the full screen frame.

11. The electronic apparatus of claim 10, wherein when the first touch operation starts at the first edge region, the device function module (142) displays a first menu for zooming the frame; and when the first touch operation slides from the first edge region into the first menu and ends at the first menu, the electronic apparatus (10) enters a frame zooming mode, and the frame function module (144) displays a page operation frame on the touch screen (12), scales down the full screen frame into the zoomed frame, and displays the zoomed frame on a first region in the page operation frame.

12. The electronic apparatus of claim 11, wherein the modules further comprise:
a page preview module (146), configured for displaying a plurality of page preview frames corresponding to a plurality of pages of the electronic apparatus (10) on other regions except the first region in the page operation frame.

13. The electronic apparatus of claim 12, wherein the frame function module (144) further receives a third touch operation that slides from a third edge region of the zoomed frame into the zoomed frame, so as to switch to display a page frame of a neighboring page of the zoomed frame on the first region.

14. The electronic apparatus of any of claims 11 to 13, said electronic apparatus being further configured for performing the method steps according to any of claims 5 to 9.

15. A computer program product, comprising program code means to be loaded into a processing unit (16) of an electronic apparatus (10) for performing the steps of the method according to any of claims 1 to 9, if executed by said processor.
